# EUROPÄISCHE PATENTANMELDUNG

(11) **EP 1 946 917 A2**
(43) Veröffentlichungstag der Anmeldung: **23.07.2008**
(21) Anmeldenummer: 07018173.0
(22) Anmeldetag: 17.09.2007
(51) Int. Cl.: B30B 15/14

(54) **Presse mit Steuerverfahren für diese**

(30) Priorität: 17.01.2007 DE 102007003335
(71) Anmelder: Schuler Pressen GmbH & Co. KG, 73033 Göppingen (DE)
(72) Erfinder: Drexling, Hartmut, 73033 Göppingen (DE); Dangelmayr, Andreas, 73113 Ottenbach (DE); Schmeink, Martin, 73084 Salach (DE); Hauff, Rainer, 73033 Göppingen (DE); Brückner, Matthias, 73734 Esslingen (DE)
(74) Vertreter: Rüger, Barthelt & Abel Patentanwälte

(57) **Zusammenfassung**

Es wurde eine Vorrichtung und ein Verfahren zur Programmierung von Pressen beschrieben. Die Programmierung erfolgt interaktiv durch Eingabe von Punkten auf einem Bildschirm, wobei die Punkte ein Bewegungsgesetz x' (α) festlegen. Zur Berechnung des sich ergebenden Stößel-Zeit-Verlaufs oder Stößel-Leitwinkel-Verlaufs wird vorzugsweise eine Fourierzerlegung bzw. Fouriertransformation und Rücktransformation der von den Eingabewerten vorgegebenen Kurve vorgenommen. Auf diese Weise wird eine glatte und gut ausführbare harmonische Stößelbewegung erreicht.

## Beschreibung

Die Erfindung betrifft eine Presse, insbesondere eine Ziehpresse sowie eine Verfahren zur Steuerung derselben.

Es kommen zunehmend Pressen in Gebrauch, deren Stößel durch einen oder mehrere Servomotoren angetrieben wird. Durch entsprechende Programmierung der Servomotorsteuerung können verschiedene gewünschte Bewegungsgesetze des Stößels realisiert werden. Unter "Bewegungsgesetz" wird dabei die Position x des Stößels in Abhängigkeit von der Zeit t oder einem so genannten Leitwinkel α verstanden. Der Leitwinkel ist beispielsweise der Winkel einer Antriebswelle einer im gleichen Takt laufenden vor- oder nachgeordneten Presse, die von dem gleichen Werkstück durchlaufen wird. Der Leitwinkel kann auch ein synthetisch erzeugter, wiederholt von 0° bis 360° z.B. zeitproportional laufender Winkel sein.

Die Programmierung von Pressenantrieben kann für den Bediener eine Herausforderung darstellen. Dies insbesondere, wenn der Zusammenhang zwischen der Drehung des Servomotors und der Bewegung des Stößels nichtlinear ist. Dies ist der Fall, wenn als Getriebe zwischen dem Servomotor und dem Stößel ein Exzentergetriebe, ein Kniehebelgetriebe oder ein ähnliches Koppelgetriebe vorgesehen wird.

Davon ausgehend ist es Aufgabe der Erfindung, dem Bediener die Programmierung der Presse zu erleichtern.

Diese Aufgabe wird mit der Presse nach Anspruch 1 wie auch mit dem Verfahren nach Anspruch 12 gelöst:

Die erfindungsgemäße Presse weist einen oder mehrere Servomotoren und einen Stößel auf, die miteinander durch ein Getriebe verbunden sind. Das Getriebe ist vorzugsweise ein Koppelgetriebe. Vorzugsweise ist es ein Koppelgetriebe mit niedriger Getriebegliederzahl. Das Koppelgetriebe hat ein Übersetzungsverhalten, das in der Nähe des unteren Totpunkts des Stößels eine hohe dynamische Steifigkeit aufweist.

Zu der Presse gehört erfindungsgemäß eine Steuerungseinrichtung, die die Eingabe eines gewünschten Bewegungsgesetzes für den Stößel sehr einfach gestaltet. Dazu weist die Steuerungseinrichtung ein Darstellungsmodul auf, das auf einem Bildschirm diejenige Weg/Zeit-Kurve oder Weg/Leitwinkel-Kurve, d.h. dasjenige Bewegungsgesetz darstellt, das für den Stößel gilt, wenn der Servomotor mit konstanter Drehzahl läuft. Diese Bildschirmwiedergabe ist für den Bediener interaktiv veränderbar, wozu unterschiedliche Möglichkeiten vorgesehen werden können. Beispielsweise ist es möglich, an der auf dem Bildschirm wiedergegebenen Kurve ausgewählte Punkte anzuzeigen, deren Position auf dem Bildschirm verschoben werden kann. Zur Verschiebung können beispielsweise Eingabefelder vorgesehen werden, in denen die x-α-Positionen der ausgewählten Punkte angegeben sind. Es ist möglich, diese Felder als Eingabefelder zu gestalten, so dass die Änderung der angegebenen numerischen Werte zu einer Verschiebung der Punkte auf dem Bildschirm führt. Es ist auch möglich, auf solche Eingabefelder zu verzichten und die Punkte beispielsweise mittels geeigneter Positioniermittel, wie Maus, Trackball oder Cursortasten auf dem Bildschirm zu verschieben. Es ist auch möglich, beide Eingabe- oder Wiedergabemöglichkeiten zu kombinieren, indem beispielsweise die mit der Maus, dem Joystick, Trackball oder dergleichen verschobenen Eingabepunkte registriert werden und in entsprechenden Feldern, deren neue Koordinaten X und α angezeigt werden. Diese durch Eingabemittel zu verändernden Punkte stellen gewissermaßen "magische" Punkte dar. Das Berechnungsmodul berechnet das neue Bewegungsgesetz jeweils so, dass es durch diese magischen Punkte läuft. Dabei erfährt die Drehzahl des Servomotors eine Modulation. Diese kann Stillstandsphasen oder auch eine oder mehrere Umkehrungen der Drehrichtung des Servomotors mit sich bringen.

Es ist möglich, von vornherein mit vorgegebenen magischen Punkten zu arbeiten, die auf dem gegebenen Bewegungsgesetz vorgegebene Positionen einnehmen und in vorgegebener Anzahl vorhanden sind. Es ist jedoch auch möglich, dem Bediener die Option zu geben, magische Punkte zu entfernen oder hinzuzufügen. Dies kann beispielsweise durch Mausklick geschehen. Es ist des Weiteren möglich, dem Bediener die Option zu geben, magische Punkte auf der Kurve des gegebenen Bewegungsgesetzes zu verschieben. Auch kann die Bedienoberfläche zunächst ohne die magischen Punkte auskommen, wobei der Bediener dann magische Punkte auf dem Bewegungsgesetz setzen und verschieben kann. Die Maximalzahl der magischen Punkte kann begrenzt werden, wenn dies gewünscht wird. Die magischen Punkte werden vorzugsweise auf dem Bewegungsgesetz angezeigt, um dem Bediener deutlich zu signalisieren, welche Punkte er als zwingende Punkte, d.h. gewissermaßen als Pflichtpunkte vorgegeben hat. Das Berechnungsmodul kann das Bewegungsgesetz des Stößels ausgehend von den vorgegebenen magischen Punkten weitgehend frei berechnen. Dabei wird bevorzugt, den Stößel beschleunigungsminimal zu bewegen. Es ist auch möglich, andere Optimierungskriterien festzulegen. Beispielsweise kann ein Optimierungskriterium die maximale, an dem Servomotor auftretende Leistung sein. Alternativ kann der Maximalstrom eine Grenze darstellen. Weiter alternativ kann ein maximales Strom-Zeit-Produkt als Optimierungsgrenze oder -kriterium herangezogen werden, um eine Überhitzung des Servomotors oder seiner Ansteuerkomponenten zu vermeiden.

Die Verschiebung der magischen Punkte kann auf die x-Richtung beschränkt sein. Es ist auch möglich, dem Bediener die Möglichkeit zu geben, einen oder mehrere magische Punkte alternativ oder zusätzlich in α-Richtung zu verschieben.

Vorzugsweise legt das Berechnungsmodul zur Ermittlung des durch die Punkte vorgegebenen geänderten Bewegungsgesetzes eine Anzahl von Winkelfunktionen zu Grunde, deren Frequenzen in ganzzahligen Verhältnissen zueinander stehen. Dabei wird davon ausgegangen, dass eine vorgegebene niedrige Anzahl von Winkelfunktionen (z.B. vier, fünf, sechs, sieben oder acht) zur Realisierung der meisten gewünschten Bewegungsgesetze ausreicht.

Die Erfindung schafft somit eine Eingabetechnik, bei der ausgehend von einer vorgegebenen Grundkinematik auf dem Eingabebildschirm beispielsweise eine gestrichelte Linie dargestellt wird, die über der Zeit oder über einem Leitwinkel vom oberen Totpunkt (Fixpunkt) über den unteren Totpunkt wieder zu dem oberen Totpunkt (Fixpunkt) verläuft. Durch Verzerren der Kurve auf dem Bildschirm oder durch Verschieben der Lage des unteren Totpunkts kann der angezeigte Linienzug auf dem Bildschirm verlagert werden. Dabei reicht es, wenn der Linienzug nur durch wenige Punkte dargestellt wird. Er kann zunächst ausgeprägte Ecken zeigen, d.h. wie eine Polygonapproximation aussehen. Außerdem kann eine Eingabe vorgesehen werden, die auf der Grundkinematik eine Reihe von Punkten erzeugt, die dann einzeln oder in Gruppen, z.B. vertikal, verschoben werden können. Die Verschiebung von Punkten in Vertikal- und/oder Horizontalrichtung, die Verzerrung des dargestellten Bewegungsgesetzes durch Anklicken einzelner Punkte und Verschieben derselben oder durch Eingabe von geänderten X und/oder α-Werten in entsprechende Eingabefelder werden Editiermöglichkeiten geschaffen. Bei allen Editiermöglichkeiten für die Punkte wird kontinuierlich überwacht, dass die Punkte den zulässigen Wertebereich nicht überschreiten und dass die kontinuierliche Reihenfolge der Punkte in horizontaler Richtung erhalten bleibt. Außerdem werden Einschränkungen bezüglich der Stetigkeit in vertikaler Richtung beachtet. Es ist möglich, ein Softwaremodul vorzusehen, das den zulässigen Wertebereich auf dem Bildschirm als Schlauch oder Band angezeigt.

Mit der vorgestellten Programmiermöglichkeit wird dem Bediener ein Mittel an die Hand gegeben, um bei einer einfachen Grundkinematik mit Koppelgetriebe von niedriger Getriebegliederzahl auch komplizierte Bewegungsgesetze auf einfache Weise realisieren zu können. Damit wird eine wesentliche Bedienungserleichterung geschaffen.

Weitere Einzelheiten vorteilhafter Ausführungsformen der Erfindung ergeben sich aus der Zeichnung, der Beschreibung oder Unteransprüchen. Die Beschreibung beschränkt sich auf einige wesentliche Aspekte der Erfindung sowie sonstiger Gegebenheiten. Die Zeichnung offenbart weitere Einzelheiten und ist vom Fachmann somit ergänzend heranzuziehen. In der Zeichnung ist ein Ausführungsbeispiel der Erfindung veranschaulicht. Es zeigen:
Figur 1 eine Presse nebst Steuerungseinrichtung in schematisierter Darstellung,
Figur 2 die Steuerungseinrichtung der Presse nach Figur 1 als Blockbild,
Figur 3 eine Bildschirmwiedergabe der Steuerungseinrichtung unter Anzeige einer Grundkinematik,
Figur 4 einen Bildschirm mit editierten einzelnen Punkten für eine neue Kinematik,
Figur 5 einen Bildschirm mit Wiedergabe einer Grundkinematik und geänderter Kinematik,
Figur 6 den Bildschirm mit Wiedergabe einer geänderten Kinematik und
Figur 7 verschiedene Programmmodule zur Editierung eines Bewegungsgesetzes eines Pressenstößels.

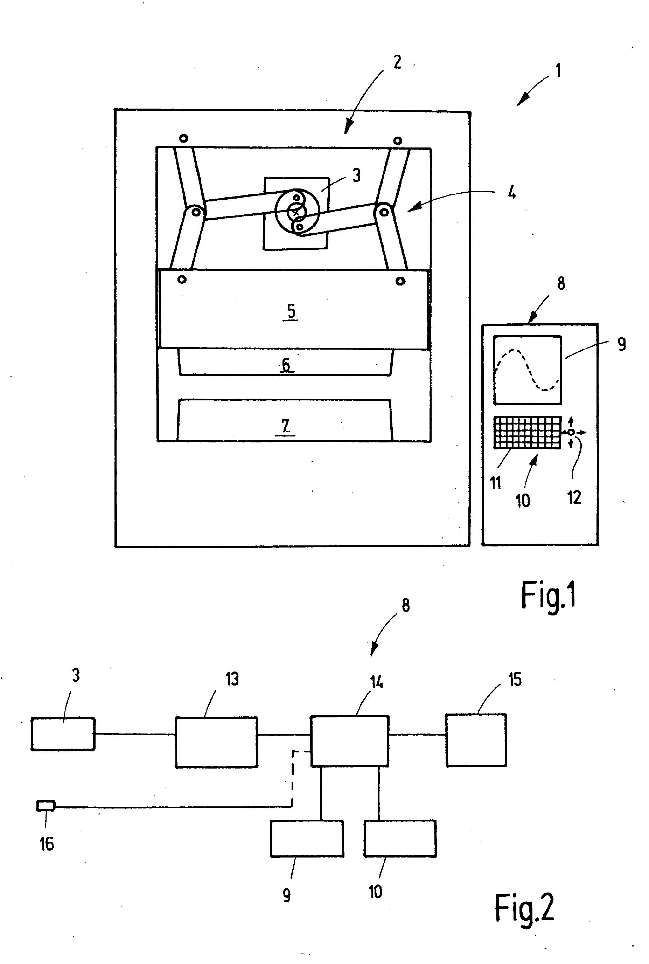

In Figur 1 ist eine Presse 1 veranschaulicht, die beispielsweise als Ziehpresse ausgebildet sein kann. Sie weist als Antrieb 2 zumindest eine Servomotor 3 auf, der über ein Getriebe 4 mit einem Pressenstößel 5 verbunden ist. Der Stößel trägt einen beweglichen Werkzeugteil 6, dem ein ruhender Werkzeugteil 7 zugeordnet ist. Das Getriebe 4 ist als Koppelgetriebe ausgebildet. Im vorliegenden Beispiel bildet es ein Kniehebelgetriebe.

Der zumindest eine Servomotor 3 ist von einer Steuerungseinrichtung 8 gesteuert, die einen Bildschirm 9 und ein Eingabemittel 10 beispielsweise in Form einer Tastatur 11 und einer Positioniereinrichtung 12 umfasst. Die Positioniereinrichtung kann ein Joystick, ein Trackball, ein Lichtstift, ein Touchpad oder dergleichen sein. Auch können Cursortasten zur Positionierung von auf dem Bildschirm 9 angezeigten Objekten genutzt werden.

Figur 2 veranschaulicht die Grundstruktur der Steuerungseinrichtung 8. Zu ihr gehören der zumindest eine Servomotor 3, eine zu seiner Ansteuerung erforderliche Leistungselektronik 13, eine Verarbeitungseinheit 14, beispielsweise in Form eines Computers nebst Speicher 15 sowie Bildschirm 9 und Eingabeeinrichtung 10. Die Verarbeitungseinheit 14 kann mit einem Sensor 16 verbunden sein, der die Drehposition des Servomotors 13 oder auch die Position des Stößels 5 erfasst. Bedarfsweise kann die Verarbeitungseinheit 14 über eine nicht weiter veranschaulichte Leitung mit einem Leitwinkelgenerator verbunden sein, der einen synthetischen Leitwinkel generiert. Alternativ kann die Verarbeitungseinheit 14 mit einer anderen Presse verbunden sein, die einen Pressentakt vorgibt oder von der Verarbeitungseinheit 14 erhält. Ein von einer angeschlossenen anderen Presse herkommendes Signal kann ebenfalls als synthetischer Leitwinkel verwendet werden. Im einfachsten Fall ist der Leitwinkel rein zeitproportional.

Die Verarbeitungseinheit 14 arbeitet mehrere Softwaremodule ab. Die Module können dabei gesonderte Programme, Programmteile, Programmbibliotheken oder Programmabschnitte sein. Vorliegend wird der Begriff "Modul" für jede Art von programm- oder software-technische Einheit verwendet, die die nachfolgend erläuterten Funktionen erfüllt.

Aufgrund der Kinematik des Getriebes 4 besteht ein fester mechanischer Zusammenhang zwischen dem Drehwinkel α des Servomotors 3 und der Bewegung X des Stößels 5. Dieser feste Zusammenhang wird als Antriebskinematik x=x(α) bezeichnet. Ein erstes Modul 17 gibt diesen Zusammenhang vor. Dies kann beispielsweise durch Berechnung oder durch Auslesen aus einer gespeicherten Liste oder Tabelle geschehen. Das Modul 17 ist beispielsweise mit einem Analysemodul 18 verbunden, das die vorgegebene Antriebskinematik einer Fourierzerlegung unterwirft. Das Analysemodul bestimmt dabei Koeffizienten aᵢ, bᵢ für Frequenzen ωᵢ, die in der Summe die Antriebskinematik x(α) ergeben.

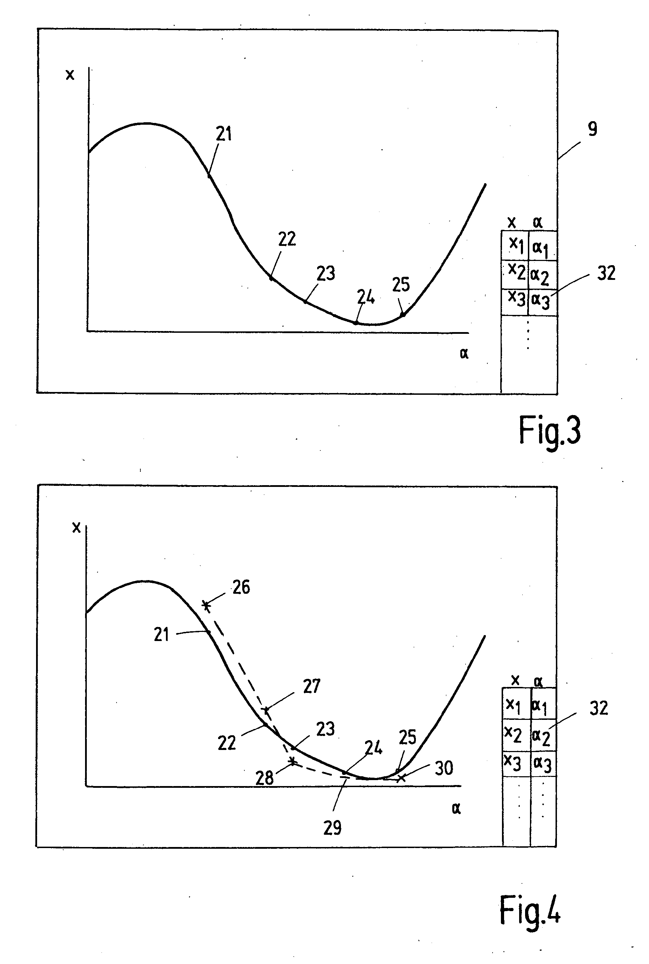

Es ist des Weiteren ein Darstellungsmodul 19 vorgesehen. Dieses erhält darzustellenden Daten entweder von dem Modul 17 oder auch von dem Analysemodul 18. Es stellt auf dem Bildschirm die Antriebskinematik x(α) dar, wie Figur 3 zeigt. Der Bildschirm 9 ist außerdem mit einem Eingabemodul 20 verbunden, das seinerseits mit der Eingabeeinrichtung 10 verbunden ist. Das Eingabemodul 20 gestattet nun eine Veränderung des in Figur 3 veranschaulichten Bewegungsgesetzes. Dies kann beispielsweise durch Beeinflussung bestimmter Punkte 21, 22, 23, 24, 25 geschehen, die auf dem Bewegungsgesetz nach Figur 3 vorhanden sind oder dort festgelegt werden können. Bei einer komfortablen Softwarevariante sind dabei die Punkte 21 bis 25 sowohl in Anzahl als auch hinsichtlich ihrer Position frei wählbar. Bei einer etwas eingeschränkteren Softwarevariante ist die Anzahl der Punkte 21 bis 25 vorgegeben. Bei einer noch weiter eingeschränkten Variante sind zumindest die Winkelpositionen α der Punkte 21 bis 25 vorgegeben.

Der Bediener kann nun die Punkte 21 bis 25 verändern, beispielsweise indem er sie mittels der Eingabeeinrichtung 10 verändert. Die Veränderung wird von dem Eingabemodul 20 erfasst. Die Veränderung kann durch Einträge von Funktionswerten in eine Eingabetabelle 32 geschehen, die auf dem Bildschirm 9 wiedergegeben wird. Bei einer komfortableren Softwarevariante kann die Eingabe alternativ oder zusätzlich durch Bewegen der Punkte 21 bis 25 auf dem Bildschirm 9 erfolgen. Bei einer derzeit bevorzugten Variante können die Punkte 21 bis 25 dabei lediglich vertikal, d.h. in X-Richtung verschoben werden. Bei einer komfortableren Softwarevariante sind die Punkte frei verschiebbar, können also auch in α-Richtung verschoben werden.

Figur 4 veranschaulicht den Eingabezustand, bei dem die Punkte 21 bis 25 in andere Vertikal- bzw. x-Positionen verschoben worden sind. Die sich ergebenden Punkte 26 bis 30 können isoliert oder durch einen Kurvenzug verbunden dargestellt werden. Vorzugsweise sind sie durch einen Polygonzug verbunden. Dieser kann andersfarbig, gestrichelt oder sonstwie hervorgehoben dargestellt werden.

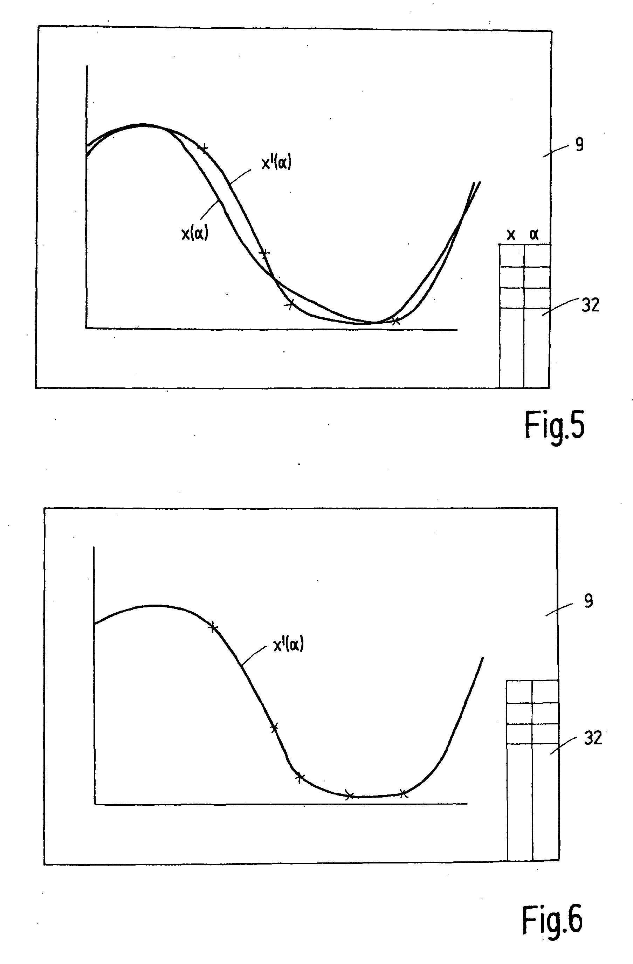

Das Eingabemodul 20 übergibt die Punktwerte nun an ein Berechnungsmodul 31 und/oder an das Analysemodul 18. Es wird darauf hingewiesen, dass das Analysemodul 18 und das Berechnungsmodul 31 zu einem einzigen Modul zusammengefasst sein können, das dann als Berechnungsmodul bezeichnet wird. Dem Berechnungsmodul liegen die Fourierkoeffizienten aᵢ, bi für das Bewegungsgesetz x(α) für den gleichmäßig drehenden Servomotor 3 vor. Dem Berechnungsmodul 31 liegen außerdem die Fourierkoeffizienten für ein Bewegungsgesetz x'(α) vor, das sich durch die geänderten magischen Punkte 26 bis 30 ergibt. Das Berechnungsmodul kann nun aus den verschiedenen Fourierkoeffizienten die Drehzahlmodulation berechnen, die der Servomotor 3 erfahren muss, um das neue Bewegungsgesetz x'(α) zu verwirklichen. Beide Bewegungsgesetze x(α) und x'(α) können, wie Figur 5 veranschaulicht, auf dem Bildschirm 9 dargestellt werden. Dies wird wiederum durch das Darstellungsmodul 19 bewirkt. Außerdem können die Daten an ein Ausgabemodul 33 übertragen werden, das die Daten für die tatsächliche Ansteuerung des Servomotors 3 aufbereitet, d.h. in Strom- und/oder Spannungssollwerte bzw. in Positionssollwerte umwandelt.

Wie Figur 6 veranschaulicht, kann eine Ausgabeart gewählt werden, bei der auf dem Bildschirm nur das neue geänderte Bewegungsgesetz x'(α) dargestellt wird. Dieses kann wiederum geändert werden, wobei dazu wie vorstehend beschrieben verfahren werden kann.

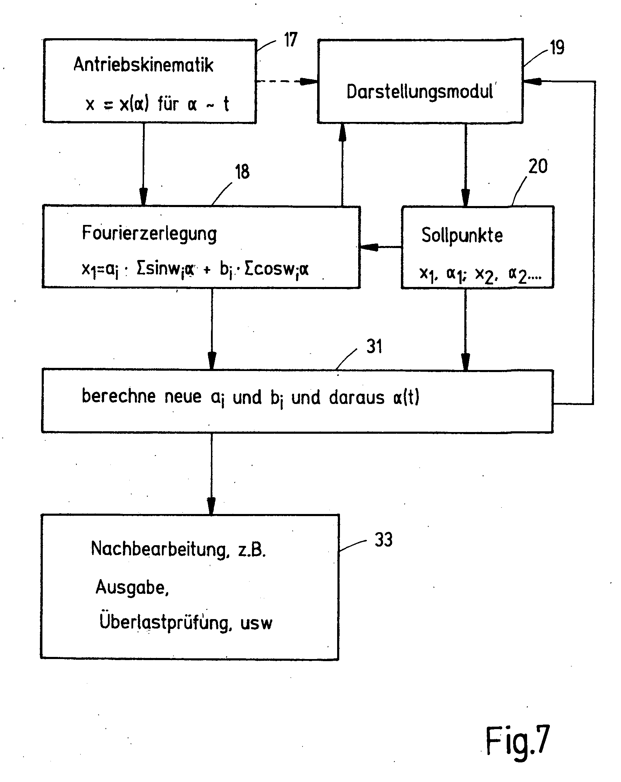

Es wird darauf hingewiesen, dass Figur 7 eine Softwarestruktur nicht aber einen Ablaufplan darstellt. Die Darstellung der Softwarestruktur ist dabei auf wesentliche Aspekte beschränkt. Sie kann durch eine andere Softwarestruktur ersetzt werden, die unter Zugrundelegung einer anderen Approximation der Bewegungsgesetze eine ähnliche, äquivalente oder gleiche Funktionalität erbringt. Das Analysemodul 18 und Berechnungsmodul 31 bevorzugen jedoch stetig differenzierbare Funktionen. Des Weiteren kann das Ausgabemodul 33 eine Überprüfungsroutine enthalten, die das erstellte neue Bewegungsgesetz x'(α) auf Belastungen des Antriebs 2 insbesondere des Servomotors 3 überprüft. Es kann eine Korrekturroutine vorgesehen sein, die im Überlastfall eine Verlangsamung der Gesamtbewegung des Stößels 5 d.h. eine Verringerung der Hübzahl vornimmt bis das Bewegungsgesetz x'(α) zu jedem Winkel- und Zeitpunkt in einem zulässigen Bereich liegt.

Es wurde eine Vorrichtung und ein Verfahren zur Programmierung von Pressen beschrieben. Die Programmierung erfolgt interaktiv durch Eingabe von Punkten auf einem Bildschirm, wobei die Punkte ein Bewegungsgesetz x'(α) festlegen. Zur Berechnung des sich ergebenden Stößel-Zeit-Verlaufs oder Stößel-Leitwinkel-Verlaufs wird vorzugsweise eine Fourierzerlegung bzw. Fouriertransformation und Rücktransformation der von den Eingabewerten vorgegebenen Kurve vorgenommen. Auf diese Weise wird eine glatte und gut ausführbare harmonische Stößelbewegung erreicht.

### Bezugszeichenliste

- 1: Presse
- 2: Antrieb
- 3: Servomotor
- 4: Getriebe
- 5: Stößel
- 6: Werkzeugteil
- 7: Werkzeugteil
- 8: Steuerungseinrichtung
- 9: Bildschirm
- 10: Eingabeeinrichtung
- 11: Tastatur
- 12: Positioniereinrichtung
- 13: Leistungselektronik
- 14: Verarbeitungseinheit
- 15.: Speicher
- 16: Sensor
- 17: Modul
- 18: Analysemodul
- 19: Darstellungsmodul
- 20: Eingabemodul/Vorgabemodul
- 21-30: Punkte
- 31: Berechnungsmodul
- 32: Tabelle
- 33: Ausgabemodul

## Patentansprüche

1. Presse (1), insbesondere Ziehpresse,
mit einem Stößel (5) zur Lagerung eines beweglichen Werkzeugteils (6),
mit wenigstens einem Servomotor (3) zum Antrieb des Stößels (5),
mit einem Getriebe (4) zur antriebsmäßigen Verbindung des Servomotors (3) mit dem Stößel (5),
mit einer Steuerungseinrichtung (8), die eine Verarbeitungseinrichtung (14), eine Speichereinrichtung (15), eine Eingabeeinrichtung (10) und einen Bildschirm (9) aufweist,
mit einem Darstellungsmodul (19) zur Darstellung eines vorgegebenen Bewegungsgesetzes (x(α)) des Stößels (5) mittels des Bildschirms (9),
mit einem Vorgabemodul (20) zur Vorgabe von Punkten (26 - 30), die von dem Bewegungsgesetz (x(α)) des Stößels (5) zu durchlaufen sind,
mit einem Berechnungsmodul (31) zur Berechnung der zur Erreichung des gewünschten Bewegungsgesetzes des Stößels (5) erforderlichen Ansteuersignale und
mit einem Darstellungsmodul (31) zur Darstellung dem sich daraus ergebenden Bewegungsgesetz (x'(α)) des Stößels (5) auf dem Bildschirm (9).

2. Presse nach Anspruch 1, **dadurch gekennzeichnet, dass** das Getriebe (4) einen nichtlinearen Zusammenhang zwischen der Drehung des Servomotors (3) und der Bewegung des Stößels (5) festlegt.

3. Presse nach Anspruch 1, **dadurch gekennzeichnet, dass** das Getriebe (4) ein Koppelgetriebe ist.

4. Presse nach Anspruch 1, **dadurch gekennzeichnet, dass** das vorgegebene Bewegungsgesetz (x(α)) des Stößels (5) ein funktionaler Zusammenhang zwischen der Zeit t oder einem Leitwinkel α und der sich ergebenden Position x des Stößels (5) ist, wenn der Servomotor (3) mit konstanter Drehzahl läuft.

5. Presse nach Anspruch 1, **dadurch gekennzeichnet, dass** zur Vorgabe der Punkte (26 - 30) diese mittels der Eingabeeinrichtung (10) auf dem Bildschirm (9) positionierbar sind.

6. Presse nach Anspruch 1, **dadurch gekennzeichnet, dass** das Berechnungsmodul (31) aus den vorgegebenen Punkten (26 - 30) unter Zugrundelegung stetig differenzierbarer Funktionen eine kinematische Funktion für die Bewegung des Stößels (5) und für die Drehung des Servomotors (3) ermittelt.

7. Presse nach Anspruch 1, **dadurch gekennzeichnet, dass** das Berechnungsmodul (31) zur Bestimmung des gewünschten Bewegungsgesetzes (x'(α)) des Stößels (5) eine Summe aus Winkelfunktionen (sin ωᵢα, cos *ω*ᵢα) nutzt.

8. Presse nach Anspruch 7, **dadurch gekennzeichnet, dass** die genutzten Winkelfunktionen (sin ωᵢα, cos ωᵢα) Frequenzen (ωᵢ) aufweisen, die in ganzzahligen Verhältnissen zu der Frequenz (ω₀) einer Winkelfunktion (sin ω₀α, cos ω₀α) stehen, die die niedrigste Frequenz aufweist.

9. Presse nach Anspruch 1, **dadurch gekennzeichnet, dass** das Berechnungsmodul prüft, ob bei Realisierung des gewünschten Bewegungsgesetzes (x'(α)) des Stößels (5) Belastungsgrenzwerte überschritten werden.

10. Presse nach Anspruch 9, **dadurch gekennzeichnet, dass** das Berechnungsmodul bei Überschreitung von Belastungsgrenzwerten die Zeit t für einen Pressenhub vergrößert.

11. Presse nach Anspruch 8 und 9, **dadurch gekennzeichnet, dass** das Berechnungsmodul (18) bei Überschreitung von Belastungsgrenzwerten die niedrigste Frequenz (wo) verringert.

12. Verfahren zur Festlegung des Bewegungsgesetzes eines Stößels (5) einer Presse (1), insbesondere Ziehpresse, die den Stößel (5) zur Lagerung eines beweglichen Werkzeugteils (6), wenigstens einen Servomotor (3) zum Antrieb des Stößels (5), ein Getriebe (4) zur antriebsmäßigen Verbindung des Servomotors (3) mit dem Stößel (5) und eine Steuerungseinrichtung (8) mit einer Verarbeitungseinrichtung (14), einer Speichereinrichtung (15), einer Eingabeeinrichtung (10), einer Ausgabeeinrichtung (13) und mit einem Bildschirm (9) aufweist,
wobei mittels des Bildschirms (9) zunächst zumindest von einem vorgegebenen Bewegungsgesetz (x(α)) des Stößels (5) zu durchlaufende Punkte (21 - 25) angezeigt werden,
Punkte (26-30) vorgegeben werden, die von einem abgewandelten Bewegungsgesetz (x'(α)) des Stößels (5) zu durchlaufen sind,
das Bewegungsgesetz (x' (α)) des Stößels (5) errechnet wird, das die vorgegebenen Punkte (26 - 30) enthält, und
das sich ergebende Bewegungsgesetz (x'(α)) des Stößels (5) mittels des Bildschirms (9) angezeigt wird.

13. Verfahren nach Anspruch 12, **dadurch gekennzeichnet, dass** auf dem Bildschirm zunächst das Bewegungsgesetz (x(α)) des Stößels (5) angezeigt wird.

14. Verfahren nach Anspruch 12, **dadurch gekennzeichnet, dass** die Eingabe der Sollpunkte (26 - 30) durch Verschiebung der vorhandenen Punkte (21 - 25) erfolgt.

15. Verfahren nach Anspruch 12, **dadurch gekennzeichnet, dass** die Eingabe der Sollpunkte (26 - 30) durch Eingabe von Werten von Stößelpositionen (xᵢ) zu entsprechenden Winkelpositionen (αᵢ) erfolgt.

16. Verfahren nach Anspruch 12, **dadurch gekennzeichnet, dass** das punktweise vorgegebene Bewegungsgesetz (x'(α)) des Stößels (5) durch eine Summe aus Winkelfunktionen mittels einer Fourierberechnung ermittelt wird.
